# EUROPÄISCHE PATENTSCHRIFT

(11) **EP 1 367 312 B1**
(45) Veröffentlichungstag und Bekanntmachung des Hinweises auf die Patenterteilung: **09.07.2008**
(21) Anmeldenummer: 02405440.5
(22) Anmeldetag: 31.05.2002
(51) Int. Cl.: F16M 11/06, G05G 1/10

(54) **Drehknopf zum Feststellen eines Geräteträgers**
Rotating knob for fastening an apparatus support
Bouton tournant pour immobiliser un support d'appareils

(43) Veröffentlichungstag der Anmeldung: 03.12.2003
(73) Patentinhaber: Vogt, Philippe, 25048 Besancon (FR)
(72) Erfinder: Vogt, Philippe, 25048 Besancon (FR)
(74) Vertreter: Moser & Götze

(56) Entgegenhaltungen:
- EP-A- 0 349 948
- US-A- 2 719 690
- US-A- 2 998 733
- US-A- 4 154 125
- US-B1- 6 352 228

## Beschreibung

Die Erfindung betrifft einen Drehknopf zum Feststellen eines Geräteträgers.

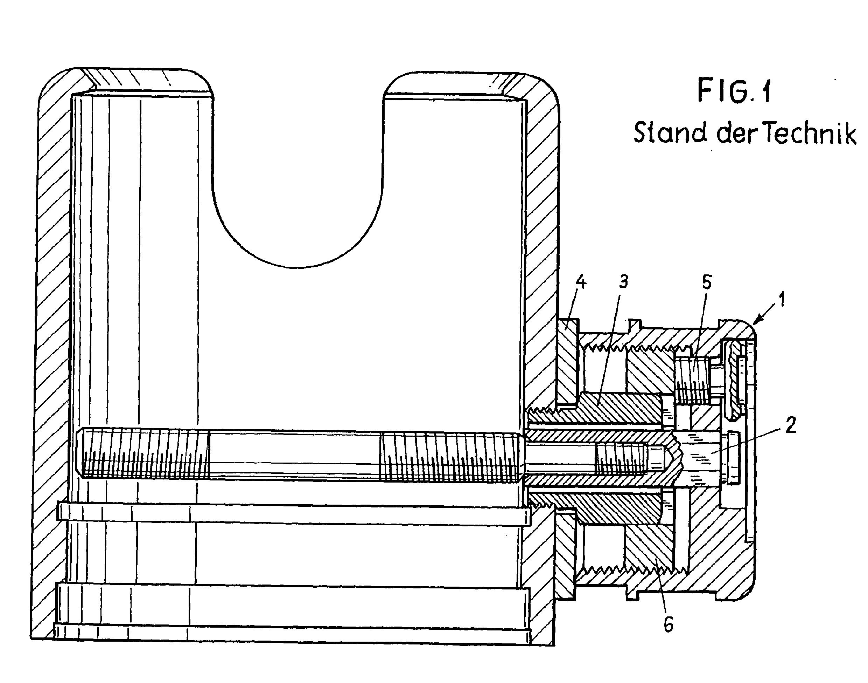

Die Fig.1 zeigt einen bekannten Drehknopf zum Feststellen eines Geräteträgers in einem Gehäuse mittels einer Klemmvorrichtung mit einer Spindel. Der Drehkopf ist am Gehäuse als auch an der Spindel montiert. Der Drehknopf umfasst eine Griffschale 1 mit einem Innengewinde, einen Kupplungsteil 2 zum Verbinden der Griffschale 1 mit der Spindel, eine Hülse 3, die mit dem Gehäuse verbindbar ist, eine Deckscheibe 4, die mit der Hülse 3 am Gehäuse befestigt ist, eine Schraube 5 zum Einstellen der Feststellkraft, die in der Griffschale 1 angeordnet ist und eine Klemmscheibe 6, die ein mit dem Innengewinde der Griffschale in Eingriff stehendes Aussengewinde ist und die auf der Hülse 3 geführt ist, derart, dass durch Drehen der Griffschale 1 die Klemmscheibe 6 eine Relativbewegung bezüglich der Griffschale 1 ausführt.

Zum Feststellen des Geräteträgers wird die Griffschale 1 im Uhrzeigersinn gedreht. Dadurch wird die Klemmvorrichtung durch die Spindel betätigt und die Klemmscheibe 6 axial verschoben bis der Geräteträger festgestellt ist. Durch Eindrehen der Schraube 5 bis zum Anliegen an der Klemmscheibe 6 wird die Position der Klemmscheibe eingestellt, welche der erforderlichen Feststellkraft für den Geräteträger entspricht. Kommen Geräte zur Anwendung für welche unterschiedliche Feststellkräfte erforderlich sind wird die Position jeweils neu eingestellt. Beim erneuten Feststellen des Geräteträgers wird die Klemmscheibe bis zum Anliegen an der Schraube 5 verschoben und dadurch eine Drehung der Griffschale 1 verhindert. Damit ist der Geräteträger festgestellt.

Bei der Anwendung des Drehknopfes hat sich ergeben, dass durch unsachgemässe Handhabung, insbesondere übermässige Kraftanwendung die Griffschale 1 über die der eingestellten Feststellkraft entsprechenden Position hinaus weiter gedreht wird. Dadurch wird die Klemmscheibe 6 gegen die Schraube 5 gepresst und in den Gewindegängen verklemmt. Dadurch wird die Griffschale 1 und die Klemmscheibe 6 miteinander blockiert und zwar so, dass der Drehknopf nicht mehr gedreht werden kann. Die sich daraus ergebende Folge ist, dass der Drehknopf vollständig ersetzt werden muss. Zudem kann dadurch die Klemmwirkung am Geräteträger nachteilig beeinflusst werden, so dass der Geräteträger blockiert oder nicht korrekt festgestellt ist.

Der Erfindung liegt die Aufgabe zugrunde, einen Drehknopf in dieser Hinsicht zu verbessern, so dass ein störungsfreies Feststellen und Lösen des Geräteträgers gewährleistet ist.

Diese Aufgabe wird erfindungsgemäss mit den Merkmalen des Anspruches 1 gelöst.

Da die Griffschale 1 und die Klemmscheibe 6 miteinander gedreht werden, führt die Klemmscheibe 6 lediglich eine lineare Bewegung aus. Dadurch ist das Überdrehen der Griffschale bezüglich der Schraube nicht mehr möglich.

Durch die Führung der Klemmscheibe 6 in der Griffschale 1 wird ein Verkanten der Klemmscheibe 6 in den Gewindegängen der Hülse 3 verhindert. Beide Massnahmen unterstützen die Klemmwirkung zwischen Schraube 5 und Klemmscheibe 6, so dass eine weitere Drehung der Griffschale 1 verhindert wird.

Die Klemmwirkung lässt sich durch Drehen der Griffschale 1 in der Gegenrichtung ohne weiteres aufheben.

Es ist von Vorteil, wenn am Kupplungsteil 2 ein Flansch 21 ausgebildet ist, welcher bei montiertem Drehknopf an der Hülse 3 anliegt. Dadurch wird ein ungewolltes Abdrehen der Griffschale 1 verhindert.

Es ist von Vorteil, wenn am Umfang der Griffschale 1 eine Ringskala 7 mit mindestens einer Markierung drehbar angeordnet ist, die nach der Einstellung der Feststellkraft auf eine an der Deckscheibe 4 vorgesehene Markierung ausgerichtet werden kann, um bei erneuter Feststellung die Einstellung zu erleichtern.

Nachfolgend wird die Erfindung anhand der beiliegenden Figuren erläutert. Es zeigen:
- Fig.1: Einen Schnitt durch eine bekannte Ausführung eines Drehknopfes;
- Fig.2: einen Schnitt durch eine erfindungsgemässe Ausführung bei gelösten Geräteträger und
- Fig.3: den Schnitt gemäss Fig.2 bei festgestellten Geräteträger.

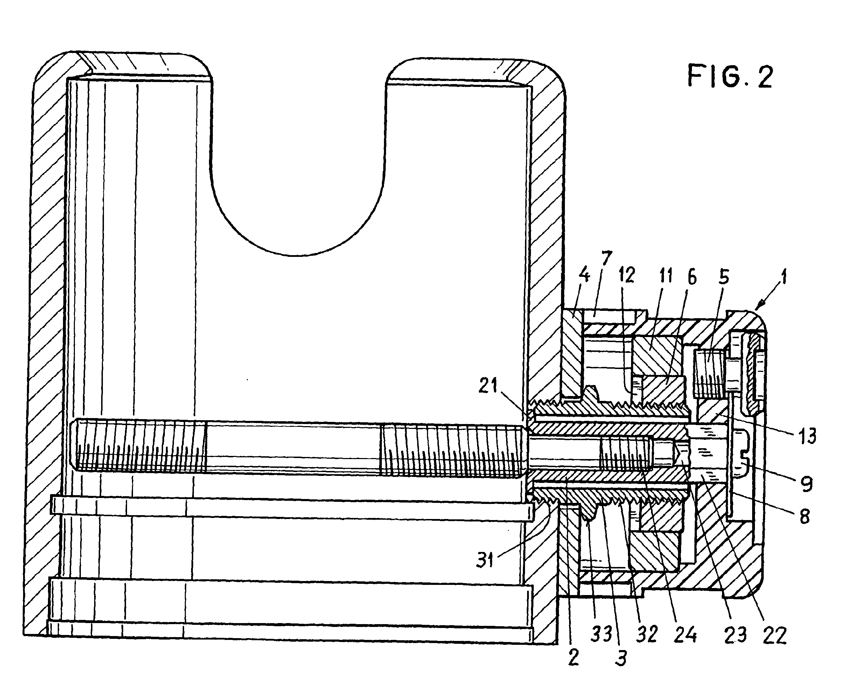

Wie die Fig.2 zeigt, enthält der Drehknopf eine Griffschale 1, einen Kupplungsteil 2 zum Verbinden der Griffschale 1 mit der Spindel, eine Hülse 3, eine Deckscheibe 4 eine Schraube 5 zum Einstellen der Feststellkraft, eine Klemmscheibe 6, eine Ringskala 7 und ein Organ 8 zur Sicherung der Schraube gegen verlieren. Die Griffschale 1 besteht aus Kunststoff oder Metall.

Die Griffschale 1 weist einen Führungsteil 11 mit einem Sechskantloch 12, der in der Griffschale 1 befestigt ist und ein Gewindeloch im Schalengrund 13 auf. Der Kupplungsteil 2 weist einen Flansch 21 an einem Ende, eine Sechkantabschnitt 22 am anderen Ende sowie eine Durchbohrung 23 mit einem ersten Gewindeabschnitt 24 und mit einem zweiten Gewindeabschnitt 25 auf. Der Kupplungsteil 2 ist mit dem ersten Gewindeabschnitt 24 auf die Spindel geschraubt Die Hülse 3 weist einen ersten Gewindeabschnitt 31, einen zweiten Gewindeabschnitt 32 sowie einen Sechskantabschnitt 33 auf und ist mit dem ersten Gewindeabschnitt 31 am Gehäuse befestigt. Die Hülse 3 umschliesst den Kupplungsteil 2 und liegt am Flansch 21 an. Die Deckscheibe 4 ist am Gehäuse anliegend mittels der Hülse 3 befestigt. Die Schraube 5 ist in das Gewindeloch im Schalengrund eingedreht. Die Klemmscheibe 6 ist als Sechskantmutter ausgebildet und ist auf den zweiten Gewindeabschnitt 32 aufgeschraubt als auch im Innensechskant des Führungsteils 11 angeordnet. Die Ringskala 7 ist auf der Griffschale 1 drehbar angeordnet. Die Griffschale 1 und ein Sicherungsorgan 8 sind mittels einer Schraube 9 am Kupplungsteil 2 gehalten.

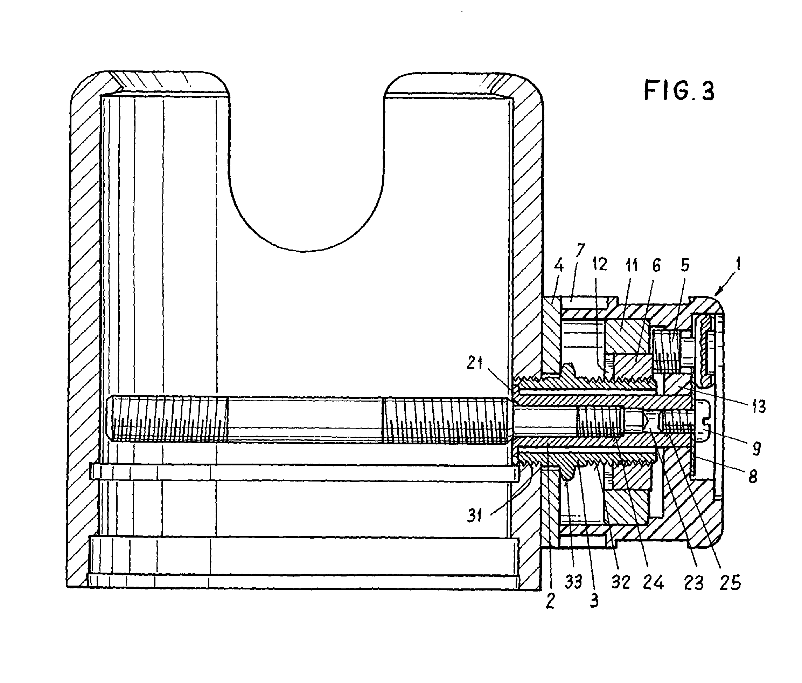

Zum Feststellen des Geräteträgers wird die Griffschale 1 und die Klemmscheibe 6 gemeinsam im Uhrzeigersinn gedreht und dadurch die Klemmscheibe 6 linear bezüglich der Griffschale solange verschoben bis der Geräteträger festgestellt ist. Danach wird die Einstellschraube 5 bis zum Anliegen an die Klemmscheibe 6 eingeschraubt. Dadurch wird die erforderliche Feststellkraft eingestellt und gleichzeitig gespeichert, so dass bei erneuten Feststellen nach jedem Lösen des Geräteträgers stets die gleiche Position der Klemmscheibe 5 und die gleiche Feststellkraft erzielt wird (Fig.3). Zur Erleichterung der Festlegung des Geräteträgers ist die Ringskala 7 und die Deckscheibe 4 am Umfang mit einer Markierung versehen.

Der Drehknopf kann beispielsweise an einem Stativkopf, vorgesehen werden, der in der EP A 0 349 948 offenbart ist.

## Patentansprüche

1. Drehknopf zum Feststellen eines Geräteträgers in einem Gehäuse mittels einer Vorrichtung mit einer Spindel, welcher Drehknopf eine Griffschale (1), einen Kupplungsteil (2) zum Verbinden der Griffschale mit der Spindel, eine Hülse (3), die mit dem Gehäuse verbindbar ist und das Kupplungsteil (2) umgibt, eine Deckscheibe (4), die mit der Hülse (3) am Gehäuse befestigbar ist, eine Schraube (5) zum Einstellen der Feststellkraft, die im Schalengrund (13) angeordnet ist und eine Klemmscheibe (6), die mit der Griffschale (1) und der Hülse (3) zusammenwirkt, so dass durch Drehen der Griffschale (1) die Klemmscheibe (6) eine Relativbewegung ausführt und zum Begrenzen der Drehung der Griffschale (1) mit der Schraube (5) in Anlage bringbar ist, **dadurch gekennzeichnet, dass** die Klemmscheibe (6) in der Griffschale (1) geführt ist und dass die Hülse (3) ein Aussengewinde aufweist, das mit einem Innengewinde der Klemmscheibe (6) zusammenarbeitet, damit die Klemmscheibe die genannte Relativbewegung ausführen kann.

2. Drehknopf nach Anspruch 1, **dadurch gekennzeichnet, dass** der Kupplungsteil (2) einen Flansch (21) aufweist.

3. Drehknopf nach Anspruch 1, **dadurch gekennzeichnet, dass**, die Deckscheibe (4) am Umfang mit einer Markierung versehen ist.

4. Drehknopf nach Anspruch 2, **gekennzeichnet durch** eine Ringskala (7), die drehbar am Umfang der Griffschale 1 angeordnet ist.

5. Drehknopf nach Anspruch 3, **dadurch gekennzeichnet, dass** die Ringskala (7) mindestens eine Markierung am Umfang aufweist.

6. Drehknopf nach Anspruch 3, **gekennzeichnet durch** ein Sicherungsorgan (8) für die Einstellschraube (5).

7. Drehknopf nach Anspruch 1, **dadurch gekennzeichnet, dass** die Griffschale (1) aus Kunststoff oder Metall besteht.

## Claims

1. Rotary knob for clamping a mounting in place in a housing by means of an arrangement having a spindle, which rotary knob has an outer shell for gripping (1), a coupling part (2) for connecting the outer shell for gripping to the spindle, a sleeve (3) which can be connected to the housing, a covering disc (4) which is fastened against the housing by the sleeve (3), a screw (5) for setting the clamping force which is arranged in the floor (13) of the outer shell, and a clamping disc (6) which co-operates with the outer shell for gripping (1) and the sleeve (3), so that the clamping disc (6) performs a relative movement as a result of the outer shell for gripping (1) being turned and, to limit the turning of the outer shell for gripping (1), is able to be brought into contact with the screw (5), **characterised in that** the clamping disc (6) is guided in the outer shell for gripping (1) and is arranged to be rotatable on the sleeve (3), thus causing, as a result of the outer shell for gripping (1) being turned, the clamping disc (6) to perform a rotary movement in synchronisation with the outer shell for gripping (1) and a linear movement relative to the outer shell for gripping (1).

2. Rotary knob according to claim 1, **characterised in that** the coupling part (2) has a flange (21).

3. Rotary knob according to claim 1, **characterised in that** the covering disc (4) is provided with a marking at the circumference.

4. Rotary knob according to claim 2, **characterised by** an annular scale (7) which is rotatably arranged at the circumference of the outer shell for gripping 1.

5. Rotary knob according to claim 3, **characterised in that** the annular scale (7) has at least one marking at the circumference.

6. Rotary knob according to claim 3, **characterised by** a member (8) for locking the setting screw (5).

7. Rotary knob according to claim 1, **characterised in that** the outer shell for gripping (1) is composed of plastics material or metal.

## Revendications

1. Bouton rotatif permettant de fixer un support d'appareil dans un boîtier au moyen d'un dispositif comportant une broche, lequel bouton rotatif comporte une coque de préhension (1), une pièce de couplage (2) permettant de relier la coque de préhension à la broche, un manchon (3) qui peut être relié au boîtier, une plaque de recouvrement (4) qui est fixée au boîtier au moyen du manchon (3), une vis (5) qui permet de régler la force de fixation et qui est disposée au fond (13) de la coque et une plaque de serrage (6) qui coopère avec la coque de préhension (1) et le manchon (3) de sorte que, lorsque l'on tourne la coque de préhension (1), la plaque de serrage (6) effectue un mouvement relatif et peut venir en appui avec la vis (5) afin de limiter la rotation de la coque de préhension (1), **caractérisé en ce que** la plaque de serrage (6) est guidée dans la coque de préhension (1) et est disposée sur le manchon (3) de façon à pouvoir tourner de sorte que, lorsque l'on tourne la coque de préhension (1), la plaque de serrage (6) effectue un mouvement de rotation synchrone avec la coque de préhension (1) et un mouvement linéaire par rapport à la coque de préhension (1).

2. Bouton rotatif selon la revendication 1, **caractérisé en ce que** la pièce de couplage (2) comporte une collerette (21).

3. Bouton rotatif selon la revendication 1, **caractérisé en ce que** la plaque de recouvrement (4) est dotée d'un repère en périphérie.

4. Bouton rotatif selon la revendication 2, **caractérisé par** une échelle annulaire (7) qui est disposée à la périphérie de la coque de préhension 1.

5. Bouton rotatif selon la revendication 3, **caractérisé en ce que** l'échelle annulaire (7) comporte au moins un repère en périphérie.

6. Bouton rotatif selon la revendication 3, **caractérisé par** un organe de sécurité (8) destiné à la vis de réglage (5).

7. Bouton rotatif selon la revendication 1, **caractérisé en ce que** la coque de préhension (1) est en matière plastique ou en métal.
